# EUROPEAN PATENT SPECIFICATION

(11) **EP 3 108 371 B1**
(45) Date of publication and mention of the grant of the patent: **29.11.2017**
(21) Application number: 15759972.1
(22) Date of filing: 18.02.2015
(51) Int. Cl.: G06F 12/02, G06F 12/08, G06F 12/10

(54) **MODIFIED MEMORY COMPRESSION**
MODIFIZIERTE SPEICHERKOMPRIMIERUNG
COMPRESSION DE MÉMOIRE MODIFIÉE

(30) Priority: 21.02.2014 US 201414187031
(43) Date of publication of application: 28.12.2016
(73) Proprietor: Microsoft Technology Licensing, LLC, Redmond, WA 98052-6399 (US)
(72) Inventor: BAK, Yevgeniy M., Redmond, Washington 98052-6399 (US); IYIGUN, Mehmet, Redmond, Washington 98052-6399 (US); WANG, Landy, Redmond, Washington 98052-6399 (US); KISHAN, Arun U., Redmond, Washington 98052-6399 (US)
(74) Representative: Goddar, Heinz J.
(86) International application number: PCT/US2015/016237
(87) International publication number: WO 2015/175062

(56) References cited:
- US-A1- 2002 147 893
- US-A1- 2007 005 911
- US-A1- 2013 159 662
- US-A1- 2014 006 745

## Description

### Background

As computer technology has advanced, the performance of computer processors has increased. The performance of such computer processors, however, is sometimes hindered by other bottlenecks in the computer. For example, the speed of data transfer from hard disk drives into random access memory (RAM) is a bottleneck in computer performance. One way to reduce the impact of bottlenecks in the computer is to store more data in RAM. However, the cost of RAM remains high enough that it is typically cost prohibitive to use very large amounts of RAM in computers.

US 2007/0005911 A1 discloses a dynamic memory compression method which, instead of a conventional swap area which is typically implemented using a hard disk, adopts a new block device "in memory" which acts as a compressed swap area, and also as a holder for the compressed area while transparently performing necessary compression and decompression. The new block device comprises several virtually contiguous memory "chunks", through which compression and free space management in memory is performed.

US 2014/0006745 A1 discloses a method of selecting memory pages for compression based on the population count. The method firstly analyzes a dataset stored within a memory page of an uncompressed memory. The compression manager 130 identifies a population count associated with the dataset based on the analyzing, compares the population count to a threshold value, and selects the memory page for compression if the population count is lower than the threshold value.

US 2002/0147893 A1 discloses a method of operating a data processing system having a main memory divided into an uncompressed portion 15 and a driver memory 14. The system comprises a device driver 16 which acts as a swap partition to the operating system. The device driver 16 intercepts memory pages to be swapped out from the operating system, compresses it, and copies the compressed page to a previously reserved driver memory area 14.

US 2013/0159662 A1 discloses a swap-out method which comprises the step of identifying candidate pages for swapping from a working set of process, reserving space in a swap file based on a calculated total size of the identified candidate pages, assigning a location in the reserved space of the swap file for each candidate file, and out-swapping the candidate pages.

### Summary

The invention is defined by the subject matter of the independent claims. Advantageous embodiments are subject to the dependent claims.

In accordance with one or more embodiments, a first set of memory pages in a page memory that have been modified are identified, wherein the first set of memory pages is allocated to one of processes of programs running on a computing device. The first set of memory pages is compressed into a compressed store that is made up of a second set of memory pages in the paged memory and is associated with only said one of the processes. After the first set of memory pages has been compressed into the compressed store, a memory manager is allowed to repurpose the first set of memory pages. Additionally, the second set of memory pages are written out to a page file rather than writing out the first set of memory pages to the page file, wherein the page file is located in a secondary storage device which has slower read/write times but larger storage capacity than the paged memory.

In accordance with one or more embodiments, a computing device includes a memory, a memory manager configured to manage pages of the memory which is a paged memory, and a compressed store manager. The compressed store manager is configured to compress a first set of memory pages that have been modified, into a compressed store of the paged memory, wherein the first set of memory page is allocated to one of processes of programs running on the computing device, and the compressed store is made up of a second set of memory pages and is associated with only said one of the processes. The compressed store manager is further configured to allow, for each memory page of the first set of memory pages, the memory manager to repurpose the memory page after the memory page has been compressed into the compressed store, and write out the second set of memory pages to a page file in the absence of writing out the first set of memory pages to the page file. The page file is located in a secondary storage device which has slower read/write times but larger storage capacity than the paged memory.

### Brief Description of the Drawings

The same numbers are used throughout the drawings to reference like features.
Fig. 1 illustrates an example system employing modified memory compression in accordance with one or more embodiments.
Fig. 2 illustrates an example lifecycle of memory pages in accordance with one or more embodiments.
Fig. 3 illustrates an example record of paged memory in accordance with one or more embodiments.
Fig. 4 illustrates an example of compressing memory pages in accordance with one or more embodiments.
Fig. 5 is a flowchart illustrating an example process for compressing memory pages in accordance with one or more embodiments.
Fig. 6 is a flowchart illustrating an example process for retrieving compressed memory pages in accordance with one or more embodiments.
Fig. 7 illustrates an example memory page map in accordance with one or more embodiments.
Fig. 8 illustrates an example region map in accordance with one or more embodiments.
Fig. 9 shows an example of out-swapping a working set in accordance with one or more embodiments.
Fig. 10 is a flowchart illustrating an example process for out-swapping the working set in accordance with one or more embodiments.
Fig. 11 is a flowchart illustrating an example process for in-swapping the working set in accordance with one or more embodiments.
Fig. 12 illustrates an example system that includes an example computing device that is representative of one or more systems and/or devices that may implement the various techniques described herein.

### Detailed Description

Modified memory compression is discussed herein. A memory in a system is made up of multiple blocks or portions referred to as memory pages (or simply pages). A set of memory pages from a working set of a program, such as at least some of the memory pages in the working set that have been modified, are compressed into a compressed store prior to being written to a page file. The memory pages can be repurposed by a memory manager after being compressed into the compressed store, regardless of whether the compressed store has been written to the page file. The compressed store is itself made up of multiple memory pages, and the compressed store memory pages can be repurposed by the memory manager after being written to the page file. Subsequent requests from the memory manager for memory pages that have been compressed into a compressed store are satisfied by accessing the compressed store memory pages (including retrieving the compressed store memory pages from the page file if written to the page file), decompressing the requested memory pages, and returning the requested memory pages to the memory manager.

Additionally, in certain situations such as when a program is suspended, the working set of memory pages is out-swapped. Out-swapping the working set of memory pages includes identifying a list of memory pages in the working set of a process of the program, compressing the identified memory pages, and writing the compressed identified memory pages to the compressed store in sequential order by virtual memory address of the identified memory pages. Space is reserved in the page file for the compressed store, and the compressed store is written out to the reserved space in the page file.

In response to a subsequent determination that the program is to be resumed, the working set of memory pages for the program is in-swapped. In-swapping the working set of memory pages includes retrieving the compressed store from the page file and storing the compressed store into a set of compressed store memory pages. The compressed store memory pages are decompressed, and returned to a memory manager for inclusion in the working set of the program.

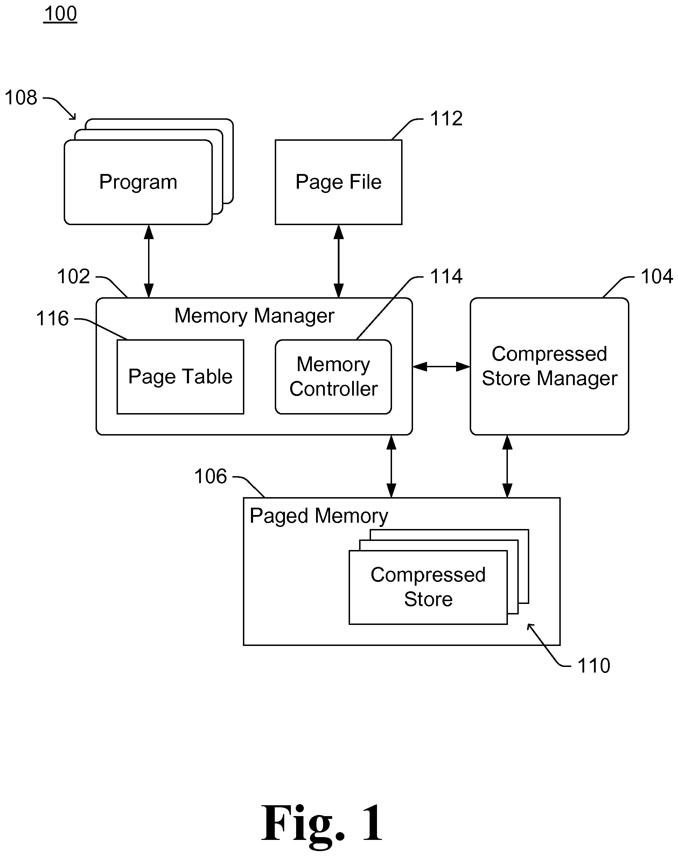

Fig. 1 illustrates an example system 100 employing modified memory compression in accordance with one or more embodiments. The system 100 includes a memory manager 102, a compressed store manager 104, and paged memory 106. Generally, the memory manager 102 manages storage of data in the paged memory 106. The memory manager 102 allocates portions of the paged memory 106 to various programs 108 in the system 100. A program 108, when running, is also referred to herein as a process (which is an instance of a running program 108), so portions of the paged memory 106 allocated to a program 108 are also referred to as allocated to a process of the program 108. The pages allocated to a process are owned by or dedicated to that process and are used by that process and no other process (and thus are also referred to as private pages). The programs 108 can be applications, operating system programs, or other components or modules. The memory manager 102 receives requests from these programs 108 to retrieve data from the paged memory 106 and to write data to the paged memory 106. The paged memory 106 can be, for example, any type of CPU (Central Processing Unit) addressable memory, such as volatile memory (e.g., RAM) or nonvolatile memory (e.g., Flash memory).

The memory manager 102 also allocates one or more portions of the paged memory 106 to the compressed store manager 104. Although illustrated separately, the compressed store manager 104 is treated as a program 108 for purposes of allocating memory pages. The compressed store manager 104 generates one or more compressed stores 110 for storage of data in compressed form, for example one compressed store 110 for each program 108. The system 100 also includes a page file 112, which is a file on a storage device in which memory pages can be stored. The storage device on which the page file 112 is stored is a secondary storage device in the system 100, and in one or more embodiments has slower read/write times but larger storage capacity than the paged memory 106. The storage device on which the page file 112 is stored can be, for example, Flash memory (e.g., a solid state disk (SSD)) or magnetic disk. Although a single page file 112 is illustrated in Fig. 1, it should be noted that multiple page files can be included in the system 100.

Memory manager 102 manages paged memory 106 using paging. The memory manager 102 organizes the memory 106 (e.g., RAM) into pages, which are a particular (e.g., fixed) size unit of data. The act of paging refers to reading data in units of pages from the backing file, which is page file 112 in system 100, when the data is not in the memory 106. The act of paging also refers to writing dirty (modified) data back in units of pages into the page file 112. The memory pages are thus also referred to as page file backed memory pages. Such paging techniques are well known to those skilled in the art.

The memory manager 102 includes a memory controller 114 that operates to carry out the functionality of the memory manager 102, and a page table 116 that is a record of various information regarding memory pages of the paged memory 106. The page table 116 includes information indicating where memory pages are stored at any given time. As discussed in more detail below, memory pages are typically stored in physical memory (paged memory 106) or in a compressed store 110 (which itself may be stored in physical memory or the page file 112), although in some situations uncompressed memory pages may be stored in page file 112. For memory pages stored in physical memory, the memory manager 102 accesses the memory pages directly. For memory pages stored in a compressed store 110, the memory manager 102 requests the memory pages from the compressed store manager 104, which retrieves and decompresses the memory pages as appropriate, and returns the decompressed memory pages to the memory manager 102. In the event that an uncompressed memory page is stored in page file 112, the memory manager retrieves the memory page from the page file 112.

The paged memory 106 includes multiple pages that can each be classified as one of multiple different types of pages at any given time, and this classification can change over time. One type of memory page is a memory page that has been allocated to a program 108 and is currently being used by the program 108, and this type of memory page is referred to as a working set page (or alternatively an assigned page) in the working set of a process of the program 108 (also referred to as the working set of the program 108). A memory page currently being used refers to a memory page that has been accessed by the program 108 within a threshold amount of time (e.g., the previous 20 seconds), or is otherwise being accessed by the program 108 in such a manner that the memory page is not to be repurposed by the memory manager 102. Repurposing a memory page refers to the memory page being re-used by the memory manager 102 for something else, such as storing different data for the same or a different program or for other use in the system.

Another type of memory page is a memory page that has been allocated to a program 108 and is not currently being used by the program 108, and this type of memory page is referred to as a standby page (or alternatively a re-assignable page). A memory page not currently being used refers to a page the contents of which have not been modified (or has been written to the page file 112 or a compressed store 110 since last modification) and that has not been accessed by the program 108 within a threshold amount of time (e.g., the previous 20 seconds), or is otherwise being accessed by the program 108 in such a manner that the memory page can be repurposed by the memory manager 102. A memory page can be repurposed by, for example, being assigned to be a different type of page (e.g., working), being allocated to a different program, and so forth.

Another type of memory page is a memory page the contents of which have been modified but not yet copied to the page file 112, and this type of memory page is referred to as a modified page (or alternatively a dirty page). A modified memory page is not to be repurposed by the memory manager 102. However, after compressing and storing a modified memory page in a compressed store 110 as discussed in more detail below, the classification of the memory page can be changed (e.g., to a standby page or a free page).

Another type of memory page is a memory page that is not currently allocated to a program 108, and with which the memory manager 102 can do anything (including being repurposed). This type of memory page is referred to as a free page (or alternatively de-allocated page).

The memory manager 102 uses various rules or criteria to determine when memory pages of the paged memory 106 are allocated to programs 108, which memory pages are allocated to which programs 108, which memory pages previously allocated to a program 108 are to be repurposed, and so forth. The memory manager 102 also determines the classification for types of memory pages, changing the classifications of memory pages as appropriate. In one or more embodiments, the memory manager 102 maintains a list or other record of which memory pages of the paged memory 106 are classified as which type of page. For example, the memory manager 102 can maintain a list or other record of working set pages, a list or other record of standby pages, a list or record of modified pages, a list or record of free pages, and so forth.

The system 100 represents one or more devices. In one or more embodiments, the components 102 - 108 illustrated in the system 100 are included as part of the same computing device. Alternatively, the components can be spread across two or more devices.

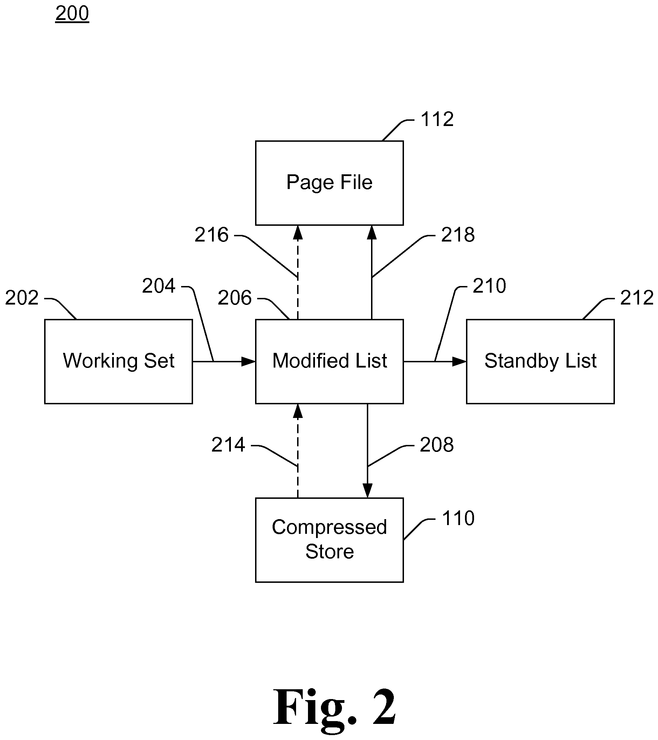

Fig. 2 illustrates an example lifecycle 200 of memory pages in accordance with one or more embodiments. A memory page can be allocated to a program, and included in a working set 202 of the program. The working set 202 of the program includes working set pages of the program. The memory manager 102 can trim (also referred to as reduce) the memory pages in the working set 202 of the program at various times and for various reasons, such as to make memory pages available for other programs. Memory pages that have been written to (modified) and trimmed from the working set 202 are moved 204 to a modified list 206 of memory pages.

The compressed store manager 104 compresses memory pages in the modified list 206 and adds 208 the compressed memory pages to memory pages of the compressed store 110. The compressed store manager 104 can determine the timing of when to compress memory pages in the modified list in different manners, such as compress memory pages at regular or irregular intervals, compress memory pages in response to at least a threshold number of memory pages being included in the modified list, compress memory pages in response to a request from the memory manager 102, compress memory pages in response to a determination that memory pages of a process are to be out-swapped as discussed in more detail below, and so forth. After being compressed and added to the compressed store 110, the memory pages in the modified list 206 are moved 210 to a standby list 212. The standby list 212 is a list of standby pages, although the memory pages can alternatively be moved to a list of free pages.

The compressed store 110 is itself made up of multiple memory pages, also referred to herein as compressed store memory pages, and these compressed store memory pages can be moved 214 to the modified list 206 as desired by the compressed store 110 or the memory manger 102. However, the compressed store memory pages do not have to be moved to the modified list for a long time (potentially indefinitely) as desired. The compressed store memory pages can remain in the working set of the compressed store.

For compressed store memory pages moved to the modified list 206, the memory manager 102 (or alternatively the compressed store manager 104) writes out 216 the compressed store memory pages to the page file 112. Thus, a memory page from the working set 202, after being compressed and stored in a compressed store memory page, can be written to the page file 112. It should be noted the compressed store manager 104 does not attempt to compress the compressed store memory pages on the modified list 206. The compressed store manager 104 can identify the memory pages it is not to attempt to compress in different manners, such as based on the process that the memory pages are allocated to (e.g., if allocated to a system process, such as the compressed store manager 104, no attempt is made to compress the memory pages), by maintaining a record of the compressed store memory pages, and so forth.

Situations can arise in which a memory page from the working set 202 that is moved to the modified list 206 cannot be compressed or otherwise added to a memory page of the compressed store 110 in an expected amount of time (e.g., within a threshold amount of time), or the system 100 chooses not to compress a memory page at all for various policy reasons. Such situations may occasionally occur, such as due to heavy memory usage in the system 100, heavy processor usage in the system 100, various policies applied to the system 100, and so forth. In such situations, the memory manager 102 writes out 218 the uncompressed memory page to the page file 112. Such memory pages are thus not included in a memory page of the compressed store 110, but the memory manager 102 maintains a record (e.g., in the page table 116) that such memory pages are available from the page file 112 rather than the compressed store manager 104.

Returning to Fig. 1, pages of the paged memory 106 each have a corresponding priority level. Only particular types of memory pages (e.g., modified pages) may have priority levels, or alternatively all types of memory pages may have priority levels. The memory manager 102 sets the priority level for each memory page, and can determine the priority level for a memory page in a variety of different manners. In one or more embodiments, the priority level for a memory page is the priority level assigned by an operating system to the process or thread that requested allocation of the memory page. Other criteria can also be used to determine the priority level for a memory page, such as a request from a program 108, the memory page being associated with a particular type of retrieval (e.g., speculative retrieval of pages), and so forth. The memory manager 102 can also change the priority levels of memory pages over time (e.g., lowering the priority levels of memory pages not accessed by a program 108 for a threshold amount of time, lowering the priority levels of compressed store memory pages that have been written to the page file 112 and moved to the standby list 212, and so forth).

The priority levels can be used in various manners in the system 100. In one or more embodiments, memory pages are written to the page file 112 based on their priority level. Memory pages to be written to the page file 112 that are lower priority are written to the page file prior to memory pages that are higher priority. This allows higher priority memory pages to remain in physical memory longer than lower priority memory pages, and avoids a priority inversion scenario in which higher priority memory pages are written to the page file (and are no longer in physical memory) before lower priority memory pages (which remain in physical memory). Similarly, in one or more embodiments memory pages are repurposed from the standby list based on their priority level. Memory pages on the standby list that are lower priority are repurposed prior to memory pages that are higher priority. This allows higher priority memory pages to remain on the standby list longer than lower priority memory pages.

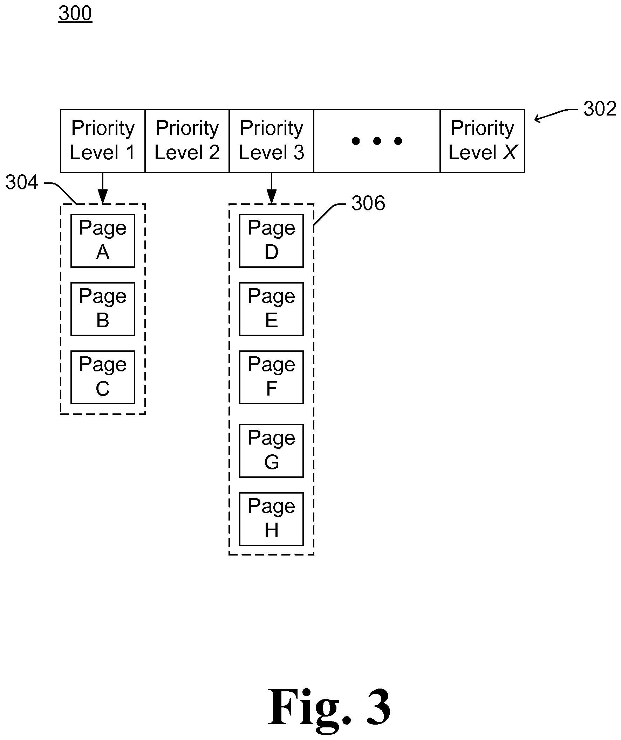

Fig. 3 illustrates an example record 300 of paged memory in accordance with one or more embodiments. A set of multiple (X) priority levels 302 are illustrated, the set of priority levels 302 including the priority levels that can correspond to pages. The record 300 of paged memory is a record of, for example, modified pages of the paged memory 106 of Fig. 1. Priority levels with larger numbers can be higher priority than priority levels with smaller numbers (e.g., priority level 4 can be higher priority than priority level 1), or vice versa. Alternatively, labels other than numbers can be used to identify priority levels, such as letters or other characters.

For each priority level 302, the record 300 identifies a set of zero or more memory pages having that priority level. For example, pages 304 correspond to priority level 1, pages 306 correspond to priority level 3, and so forth. The record 300 can be maintained in any of a variety of different manners, such as a list or other data structure identifying memory pages corresponding to a particular priority level, using different storage areas (e.g., different caches) for memory pages corresponding to different priority levels, and so forth.

Returning to Fig. 1, the compressed store 110 is implemented as one or more memory pages allocated to the compressed store manager 104 by the memory manager 102. These memory pages are memory pages in user mode virtual address space of the compressed store manager 104, which provides various functionality. The memory pages implementing the compressed store 110 do not consume kernel virtual address space, and provide security to prevent data exposure because no unprivileged user mode program can access data on the memory pages. Furthermore, by using memory pages in user mode virtual address space of the compressed store manager 104, the memory manager 102 and compressed store manager 104 have control over the memory pages using existing memory manager application programming interfaces (APIs), allowing the compressed store manager 104 to control pageability of its backing data, swapping capabilities, and so forth as it desires.

In one or more embodiments, the compressed store manager 104 compresses pages of the paged memory 106 and stores the compressed pages in a region of a compressed store 110, also referred to as compressing the memory pages into the compressed store 110 or into the region of the compressed store 110. The compressed store manager 104 generates a separate compressed store 110 for (and associated with) each program 108, and adds compressed memory pages from the modified list 206 from a particular program 108 to regions of the compressed store 110 associated with the particular program. Alternatively, the compressed store manager 104 can generate and maintain compressed stores 110 at different granularities other than one compressed store 110 for each program 108 (e.g., the compressed storage manager 104 can generate and maintain compressed stores 110 for an arbitrary set of programs 108, or for all of the pageable memory in the system).

Each region of the compressed store 110 is made up of multiple memory pages of the paged memory 106 that are allocated to the compressed store manager 104 by the memory manager 102. For example, a region may be 128 kilobytes and the memory pages may each be 4 kilobytes, although these values are examples and other region and/or page sizes can alternatively be used. Pages of the paged memory 106 that are being compressed into a particular region have at least similar priority levels, and the memory pages that make up a region of the paged memory 106 have at least similar priority levels as the memory pages compressed into that region. Memory pages having at least similar priority levels refer to memory pages having the same or similar priority levels.

It should be noted that the operations discussed herein as performed by the compressed store manager 104 or a compressed store 110 can be performed by one or both of the compressed store manager 104 and a compressed store 110, that operations discussed herein as being performed by the compressed store manager 104 can alternatively be performed by a compressed store 110, and that operations discussed herein as being performed by a compressed store 110 can alternatively be performed by the compressed store manager 104. In one or more embodiments, the compressed store manager 104 is responsible for managing each compressed store 110, routing read and write requests to the appropriate compressed store 110, managing memory for the compressed store 110 (e.g., requesting memory pages be allocated to a compressed store 110), and so forth. In such situations, each compressed store 110 can simply be a set of memory pages. Alternatively, at least some of the control and logic for managing memory for a compressed store 110 (e.g., requesting a set of pages of the paged memory 106 be allocated to the compressed store 110 by the memory manager 102) can be implemented by the compressed store 110 itself. In such situations, the compressed store 110 includes one or more memory pages as well as a compressed store module to implement the control and logic for managing memory for the compressed store 110.

In one or more embodiments, pages of the paged memory 106 that are being compressed into a particular region of the compressed store 110 have the same priority level, and different regions are used for different priority levels. The memory pages that make up a region of the compressed store 110 have the same priority level as the memory pages compressed into that region. For example, the compressed store manager 104 can compress the pages 304 of Fig. 3 into one region that is made up memory pages allocated to the compressed store manager 104 and having priority level 1. By way of another example, the compressed store manager 104 can compress the pages 306 of Fig. 3 into another region that is made up of memory pages allocated to the compressed store manager 104 and having priority level 3. It should be noted that for each priority level, compressed store manager 104 can create zero or more regions made up of memory pages corresponding to that priority level.

Alternatively, pages of the paged memory 106 that are being compressed into a particular region of the compressed store 110 may have similar but not necessarily the same priority levels. Which priority levels are similar can be determined in different manners, such as based on whether the priority levels are within a threshold number (e.g., 1 or 2) of levels of one another. For example, priority level 1 and priority level 2 can be similar and thus pages of priority level 1 and pages of priority level 2 can be compressed into the same region, but priority level 1 and priority level 5 may not be similar and thus pages of priority level 1 and pages of priority level 5 are not compressed into the same region.

Similarly, the memory pages that make up a region of the paged memory 106 may have similar but not necessarily the same priority levels as the memory pages compressed into that region. For example, the memory pages that make up a region of the compressed store 110 may have priority level 3, and the memory pages compressed into that region may have priority level 2 or priority level 3. Furthermore, the region can be made up of memory pages of the same or similar priority level. For example, a region may be made up of some memory pages having priority level 2 and some memory pages having priority level 3.

To create a region, the compressed store manager 104 requests a set of pages of the paged memory 106 be allocated to the manager 104 by the memory manager 102. The allocated set of pages are classified as working set pages, and the compressed store manager 104 associates the allocated set of pages with a particular compressed store 110. The compressed store manager 104 compresses memory pages on the modified list 206, and stores those compressed pages in the set of pages allocated to the compressed store manager 104.

Thus, for example, a particular set of pages is compressed into an additional set of pages corresponding to at least similar priority levels. After that particular set of pages is compressed, the additional set of pages are also classified as modified pages. Thus, compressed store manager 104 compresses that particular set of pages into a different set of pages of the same type (modified) and corresponding to at least similar priority levels. However, as the compressed store manager 104 compresses that particular set of pages, the quantity of pages in that particular set of pages is typically greater than the quantity of pages in the compressed set of pages. The compressed set of pages can then be written to the page file 112. Various different policies can be applied to determine when (or whether) the compressed set of pages are written to the page file 112.

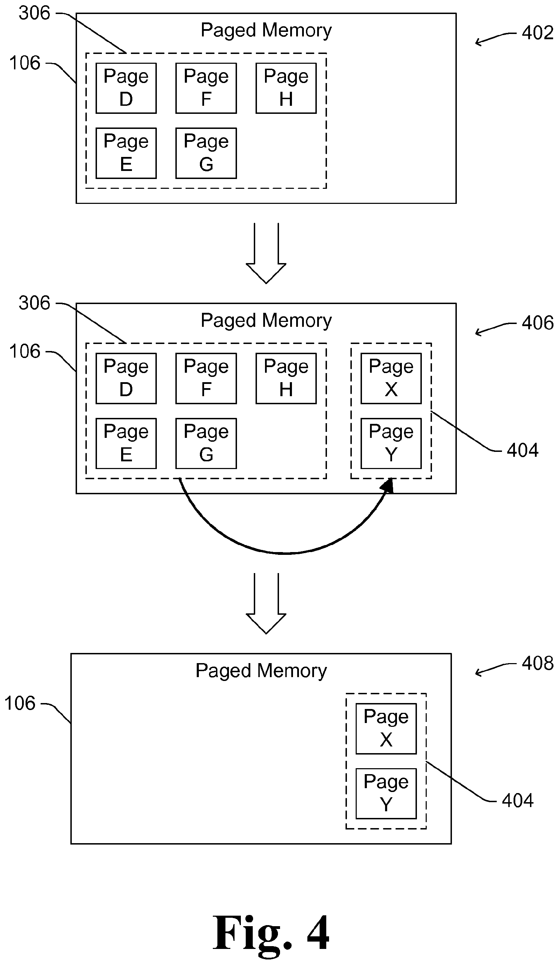

Fig. 4 illustrates an example of compressing memory pages in accordance with one or more embodiments. The paged memory 106 includes five memory pages 306 having the same priority level (e.g., priority level 3 as discussed above), as illustrated at 402. The compressed store manager 104 is allocated a region of a compressed store including two memory pages 404 having at least similar priority levels as the memory pages 306. The compressed store manager 104 compresses the memory pages 306 into the memory pages 404, as illustrated at 406. After compression, the memory manager 102 can repurpose the memory pages 306 because the compressed version of the memory pages 306 are stored in the paged memory 106 as memory pages 404. Thus, after compression the paged memory 106 stores the memory pages 404 but need not store the memory pages 306.

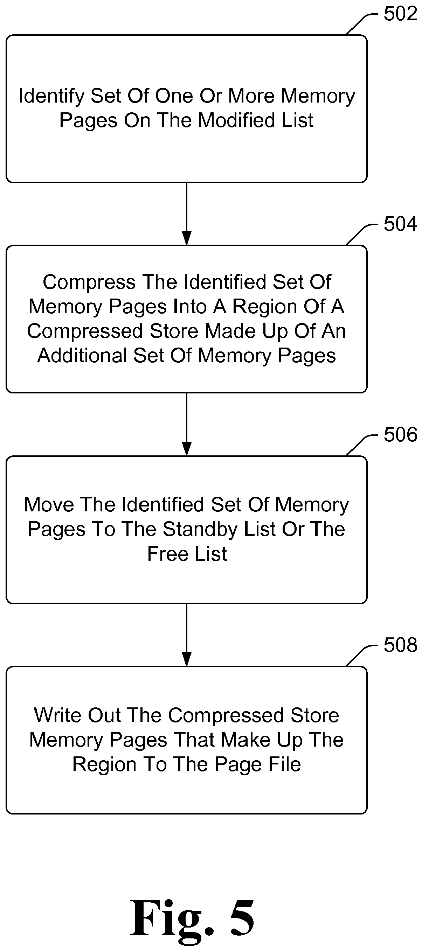

Fig. 5 is a flowchart illustrating an example process 500 for compressing memory pages in accordance with one or more embodiments. Process 500 is carried out by a compressed store manager, such as compressed store manager 104 of Fig. 1, and can be implemented in software, firmware, hardware, or combinations thereof. Process 500 is shown as a set of acts and is not limited to the order shown for performing the operations of the various acts. Process 500 is an example process for compressing memory pages; additional discussions of compressing memory pages are included herein with reference to different figures.

In process 500, a set of one or more memory pages on the modified list are identified (act 502). The set of one or more memory pages can be identified in various manners, such as being identified in the order the memory pages are added to the modified list, based on priority levels of pages (e.g., lower priority pages being identified before higher priority pages), and so forth.

The set of memory pages identified in act 502 are compressed into a region of a compressed store of the paged memory (act 504). This region of the compressed store is made up of one or more compressed store memory pages that have at least similar priority levels as the set of memory pages identified in act 502. As part of the compressing in act 504, the compressed store manager maintains a record of where in the region the compressed version of each memory page of the set of memory pages is stored. This record can take various forms, such as for each compressed version of a memory page a record of which one or more compressed store memory pages store the compressed version of the memory page, for each compressed version of a memory page a record of an address range in the region that stores the compressed version of the memory page, and so forth.

Compressing a memory page refers to compressing the content of (e.g., data stored in) the memory page. Any of a variety of different public and/or proprietary compression techniques can be used to compress a memory page. For example, a memory page can be compressed using run-length encoding compression algorithms, LZW compression algorithms, Huffman coding algorithms, and so forth. Multiple different compression algorithms can optionally be employed, such as different compression algorithms for different types of content. For example, one compression algorithm may be used for alphanumeric and/or text content, another compression algorithm may be used for image content, and another compression algorithm may be used for audio content. The compression technique used to compress a memory page is typically a lossless compression algorithm, although in certain circumstances (e.g., for certain image and/or audio content) a lossy compression algorithm may alternatively be used. The particular compression algorithm may also be device dependent, where a faster device (e.g., with a more powerful one or more processors) may be configured with a more processor-intensive compression algorithm that compresses better whereas a slower device (e.g., with a less powerful one or more processors) may be configured with a less processor-intensive algorithm that does not compress as well. The particular compression algorithm may also be based on a tradeoff with the storage device performance. If the CPU outperforms the storage device by a large margin, then a more processor-intensive compression algorithm that compresses better (and thus results in less storage device I/O) can be used.

In one or more embodiments, the memory pages are compressed in act 504 individually. Alternatively, two or more memory pages can be compressed together (e.g., a compression algorithm can be run on two or more memory pages together rather than individually).

Additional processing of the set of memory pages can also optionally be performed in act 504. This additional processing can be encrypting the content of the set of memory pages (e.g., using symmetric key encryption, public key encryption, and so forth), generating error-detecting data such as CRC (cyclic redundancy check) data for the set of memory pages, generating authentication information such as HMAC (Hash Message Authentication Code) data for the set of memory pages, and so forth.

The set of memory pages identified in act 502 are moved to the standby list (act 506) after being compressed into the compressed store, or alternatively to the free list. The set of memory pages can be moved to the standby list (or free list) in various manners, such as in response to the compressed store manager 104 notifying the memory manager 102 that the set of memory pages can be freed. The set of memory pages identified in act 502 can be moved to the standby list (or free list) and repurposed because two versions of the same memory page (one version being uncompressed and one version being compressed) need not be kept in paged memory as it may not be an efficient use of paged memory.

The compressed store memory pages that make up the region of the compressed store are written out to the page file by the memory manager (act 508). It should be noted that the compressed store memory pages need not be written to the page file immediately. Rather, writing out of the compressed store memory pages can be delayed until a later time, such as a time when the memory manager 102 desires to free memory pages for allocation to another program 108, a time when the compressed store manager 104 desires to write the compressed store memory pages, and so forth. It should also be noted that any number of techniques can be implemented to improve the speed, efficiency, and so forth of writing the compressed store memory pages to the page file (e.g., the compressed store memory pages can be written in contiguous chunks, etc.).

It should further be noted that the compressed store memory pages are written to the page file 508 rather than writing out the set of memory pages identified in act 502 to the page file. Thus, compressed versions of the set of memory pages identified in act 502 are written to the page file without (or in the absence of) writing out the decompressed versions of the set of memory pages to the page file.

Once compressed store memory pages that make up the region are written to the page file, the compressed store memory pages are placed on the standby list at the priority level of the compressed store memory pages (or alternatively a lower level). At this point, the compressed store memory pages are treated as available memory in the system 100 and can be repurposed at any time as desired by the memory manager 102.

In one or more embodiments, the compressed store manager does not allow the memory manager to write out a compressed store memory page until the compressed store memory page is substantially filled. A compressed store memory page being substantially filled refers to little if any storage space remaining in the memory page into which additional compressed memory pages could be stored. For example, at least a threshold amount of the storage space of the compressed store memory page has been used to store the compressed memory pages.

It should be noted that although some of the discussions herein refer to compressing memory pages of one or more processes, the techniques discussed herein analogously apply to compressing memory pages for all pageable memory, which can include user mode paged memory and kernel mode paged memory. In such situations the entire page file is represented by the memory in the compressed store, and the compressed store essentially manages the page file as all modified pages go through the compressed store.

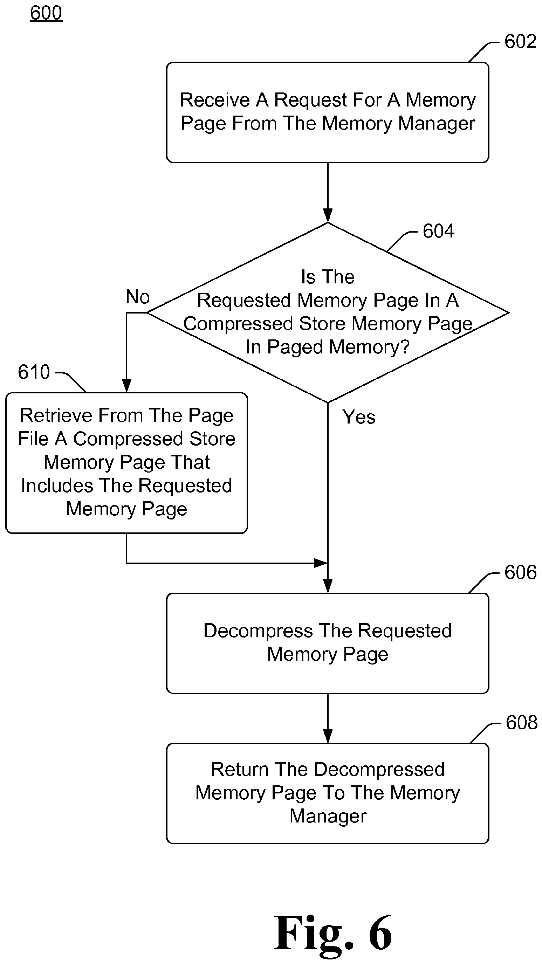

Fig. 6 is a flowchart illustrating an example process 600 for retrieving compressed memory pages in accordance with one or more embodiments. Process 600 is carried out by a compressed store manager, such as compressed store manager 104 of Fig. 1, and can be implemented in software, firmware, hardware, or combinations thereof. Process 600 is shown as a set of acts and is not limited to the order shown for performing the operations of the various acts. Process 600 is an example process for retrieving compressed memory pages; additional discussions of retrieving compressed memory pages are included herein with reference to different figures.

A request for a memory page is received from the memory manager (act 602). This request can be, for example, in response to a request from a program 108 requesting access to content in a memory page after at least one memory page was compressed into a compressed store 110. The request includes an identifier of at least one memory page, also referred to as a key. The memory manager can request a single memory page or multiple memory pages.

In response to the request, a check is made as to whether the requested memory page is in a compressed store memory page in paged memory (act 604). As discussed above, the compressed store memory pages need not be immediately written out to the page file 112, so the requested memory page may still be available in a compressed store memory page of the paged memory 106. It should be noted that the compressed store memory page may be in a working set of the compressed store manager 104 or on various lists (e.g., a modified list or a standby list), but still be in paged memory.

If the requested memory page is in a compressed store in paged memory, then the requested memory page is decompressed (act 606) and returned to the memory manager (act 608). After being decompressed and returned, the compressed memory page is deleted from the region of the compressed store 110, thus avoiding duplication of the memory page between the uncompressed and compressed forms of the memory page. After the contents of a compressed store memory page have been decompressed and returned, the compressed store memory page can be repurposed or freed.

The manner in which the requested memory page is decompressed can vary based at least in part on the technique used to compress the requested memory page. Any other processing performed on the memory page is also verified or undone in act 606, such as decrypting the memory page, verifying error-detecting data, verifying authentication information, correcting data (if possible) if this verification fails, and so forth. If error-detecting data or authentication information cannot be verified and/or the data corrected, then an indication that the requested memory page is corrupted can be returned to the memory manager rather than the decompressed requested memory page.

If the requested memory page is not in a compressed store in paged memory, then a compressed store memory page that includes the requested memory page is retrieved from the page file (act 610). Retrieving a compressed store memory page includes reading the compressed store memory page from the page file and storing the compressed store memory page into a compressed store 110 of the paged memory 106. The requested memory page is then in a compressed store 110 in paged memory, so the requested memory page is decompressed (act 606) and returned to the memory manager (act 608).

It should be noted that the acts 604 and 610 can be performed together. For example, the compressed store manager 104 maintains a record of which memory pages are compressed into which compressed store memory pages. In response to the request in act 602, the compressed store manager 104 reads the compressed store memory page in which the requested memory page is compressed. If the compressed store memory page is in the compressed store 110 of the paged memory 106, then the compressed storage manager 104 reads the compressed store memory page from paged memory 106. If the compressed store memory page is not in the compressed store 110 of the paged memory 106, then a page fault occurs, the memory manager 102 retrieves the compressed store memory page from the page file and places the compressed store memory page into the paged memory 106, then the compressed storage manager reads the compressed store memory page from paged memory 106.

It should also be noted that the compressed storage manager 104 can optionally choose to decompress and return (and retrieve from the page file if need be) one or more memory pages in addition to a requested memory page. For example, the compressed storage manager 104 can choose to decompress and return one or more memory pages nearby (e.g., within a threshold address range) of a requested memory page in an attempt to increase performance by reducing future memory manager requests for memory pages.

It should further be noted that, with the compressing of memory pages and retrieval of memory pages discussed herein, the compressed store manager 104 operates to guarantee forward progress of the write (compression) or read (retrieval) request from the memory manager. The forward progress guaranteed by the compressed store manager 104 refers to preventing deadlocks in the system 100 because no memory pages are available at least in part due to the compression of memory pages. The compressed store manager 104 operates to guarantee this forward progress regardless of whether a requested memory page has already been compressed and stored in the page file 112 and regardless of whether a requested memory page has been repurposed after being compressed and stored in the page file 112. In one or more embodiments, forward progress for compressing memory pages is guaranteed by informing the memory manager to write one or more uncompressed memory pages on the modified list to the page file, thereby freeing one or more memory pages. Forward progress for retrieving memory pages is guaranteed by pre-allocating the necessary resources (e.g., one or more memory pages in the working set of the compressed storage manager) up-front to ensure that at least one such read will always have the needed resources to proceed.

Returning to Fig. 1, each memory page has an identifier (also referred to as a key) associated with it that allows the memory pages to be distinguished from one another. This identifier can be assigned by any of various components, such as the memory manager 102 or the compressed store manager 104. The compressed version of a memory page takes up less space in the paged memory 106 than the memory page itself, so the same data unit structure is not used by compressed store manager 104. For example, the memory manager 102 may manage paged memory 106 by memory pages, but compressed store manager 104 would not.

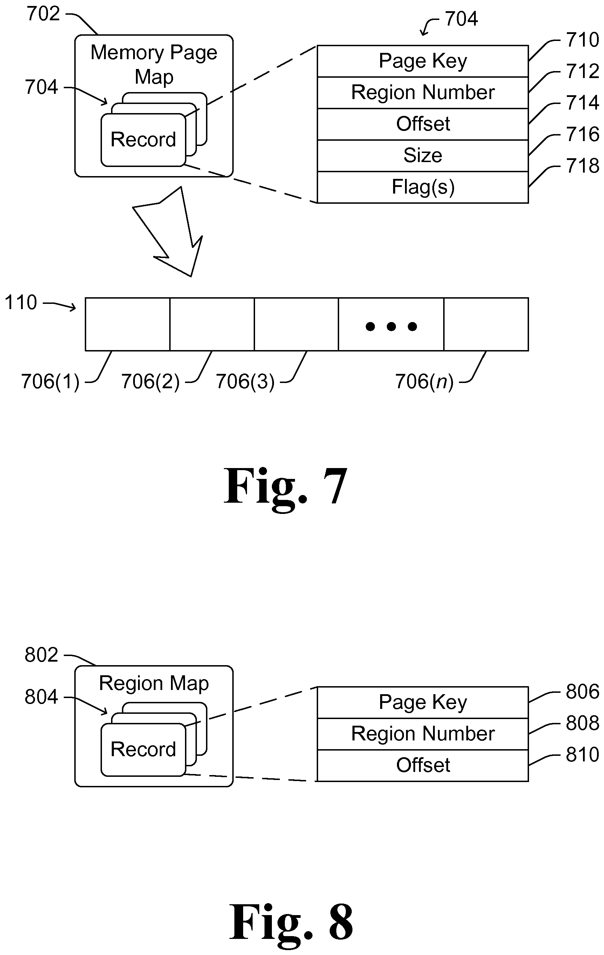

The compressed store manager 104 maintains a memory page map to identify in which regions of compressed stores 110 the various compressed memory pages are stored. Fig. 7 illustrates an example memory page map 702 in accordance with one or more embodiments. For each memory page compressed into the compressed store 110, the memory page map 702 maintains a corresponding record 704 identifying where that compressed memory page is stored in the regions of memory pages. The compressed store 110 is illustrated as one or more (n) different regions 706(1), ..., 706(n), each of which is itself made up of multiple memory pages as discussed above. In one or more embodiments, a separate memory page map is maintained for each compressed store 110 in paged memory 106. Alternatively, memory page maps for multiple compressed stores can be combined into a single memory page map, and the record 704 can include an identifier of the compressed store 110 in which the compressed memory page is stored.

Each record 704 includes a page key field 710, a region number field 712, an offset field 714, a size field 716, and a flag(s) field 718. The page key field 710 stores the identifier of the corresponding compressed memory page. This identifier can take any of a variety of different forms. For example, it could be a process identifier and virtual address, a record identifier, and so forth.

The region number field 712 stores an identifier of the particular region 706 in which the corresponding compressed memory page is stored. Although typically a number, this region could be identified in any of a variety of other manners. The offset field 714 stores an identifier of an offset into the particular region 706 where storage of the data for the corresponding compressed memory page begins. Alternatively, rather than region and offset identifiers, one or more fields storing any other identifier(s) of the location in the compressed portion where the corresponding compressed memory page is stored could be used.

The size field 716 stores an identifier of the size (e.g., in bytes) of the corresponding compressed memory page. Given the region, the offset into the particular region, and the size of the compressed memory page, a memory address range at which the compressed memory page is stored can be readily identified. The flag(s) field 718 stores various state information regarding the corresponding compressed memory page. Examples of such flags include a selection priority for the memory page used to determine which memory pages are selected to be compressed, a priority level corresponding to the memory page, and so forth.

It is to be appreciated that the memory page map 702 is only an example. In other embodiments, additional fields can be included in each record of the map 702. For example, error-detecting data such as CRC data, authentication information such as HMAC data, information describing the use history and/or frequency of the memory page, and so forth can be included in each record of the map 702. Furthermore, one or more of the fields 710 - 718 can be omitted from the records of the map 702. Additionally, it should be noted that the data in one or more of the fields 710 - 718 can be stored with the memory page in paged memory 106 rather than in a separate record.

In addition to the memory page map 702, the compressed store manager 104 also maintains a region map to identify what memory page is stored in a particular location of a region. Thus, the memory page map 702 operates to identify where an identified compressed memory page is stored, whereas the region map operates to identify which compressed memory page is stored in a given location of a region.

Fig. 8 illustrates an example region map 802 in accordance with one or more embodiments. For each offset into a region where a different memory page is stored, the region map 802 maintains a record 804 identifying the corresponding compressed memory page stored at that offset. Each record 804 includes a page key field 806, a region number field 808, and an offset field 810.

The page key field 806 stores the identifier of the corresponding compressed memory page, analogous to page key field 710 of record 704 of Fig. 7. The region number field 808 stores an identifier of the particular region 706 in which the corresponding compressed memory page is stored, analogous to the region number field 712 of record 704. The offset field 810 stores an identifier of an offset into the particular region 706 where storage of the data for the corresponding compressed memory page begins, analogous to the offset field 714 of record 704. Alternatively, rather than region and offset identifiers, one or more fields storing any other identifier(s) of the location in the compressed portion where the corresponding compressed memory page is stored could be used.

It is to be appreciated that the region map 802 is only an example. In other embodiments, additional fields can be included in each record of the map 802, and/or one or more of the fields 806 - 810 can be omitted from the records of the map 802. Additionally, it should be noted that the data in one or more of the fields 806 - 810 can be stored with the memory page in paged memory 106 of Fig. 1 rather than in a separate record.

The memory page map 702 of Fig. 7 and the region map 802 of Fig. 8 can be implemented in any of a variety of different manners. In one or more embodiments, these maps are each implemented as a B+-tree for increased performance in accessing the individual records. Alternatively, any of a variety of other conventional data structures can be used to implement these maps, such as AVL trees, hash table, arrays, and so forth.

Returning to Fig. 1, situations can arise in which the memory manager 102 desires to move the entire working set for a program 108 out of the paged memory 108. In one or more embodiments, such situations arise when a program 108 is being suspended in the system 100. As part of the process of suspending the program 108, the working set of memory pages is compressed and stored in a compressed store 110, which is also referred to as out-swapping the working set. This compressed store 110 can subsequently be written to the page file 112. If the program 108 is to be subsequently resumed (e.g., no longer suspended), the compressed store 110 is retrieved from the page file 112 (if it was written to the page file 112), and the memory pages in the compressed store 110 are decompressed and returned to the working set 202, which is also referred to as in-swapping the working set.

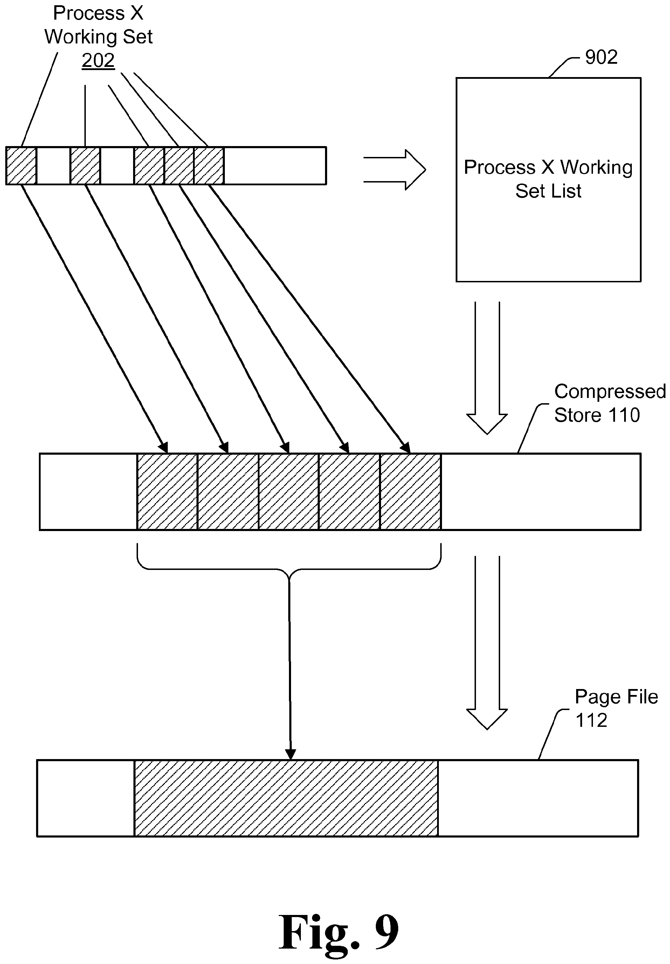

Fig. 9 shows an example of out-swapping a working set in accordance with one or more embodiments. In Fig. 9, a working set 202 of a particular process of a program 108, Process X, is illustrated. Out-swapping the working set 202 is performed by generating a list 902 of memory pages, such as a list of starting virtual addresses and lengths (e.g., a count of sequential memory pages in the working set starting at that starting virtual address). The list is ordered sequentially, such as from smallest address to largest address (these addresses being virtual addresses of the memory space in which the process executes). The memory pages of the working set 202 are added to the modified list 206 in this same sequential ordering. Furthermore, the memory pages of the working set 202 are compressed in this same sequential ordering, and written to the compressed store 110 associated with the program 108 in this same sequential ordering as shown. Thus, although the memory pages in the working set 202 may be non-contiguous in the working set 202, they are written into contiguous locations in the compressed store 110.

The total size of the compressed store 110 is also determined, and space reserved in the page file 112 sufficient to store the compressed store 110. When the compressed store 110 is written to the page file 112, the compressed store 110 is written contiguously to the page file 112. The writing of pages into a contiguous, sequentially ordered, portion of the page file may enable a subsequent read operation to read a large, sequentially ordered block of the page file 112 when the pages are read back into working set 202 during a subsequent in-swapping operation.

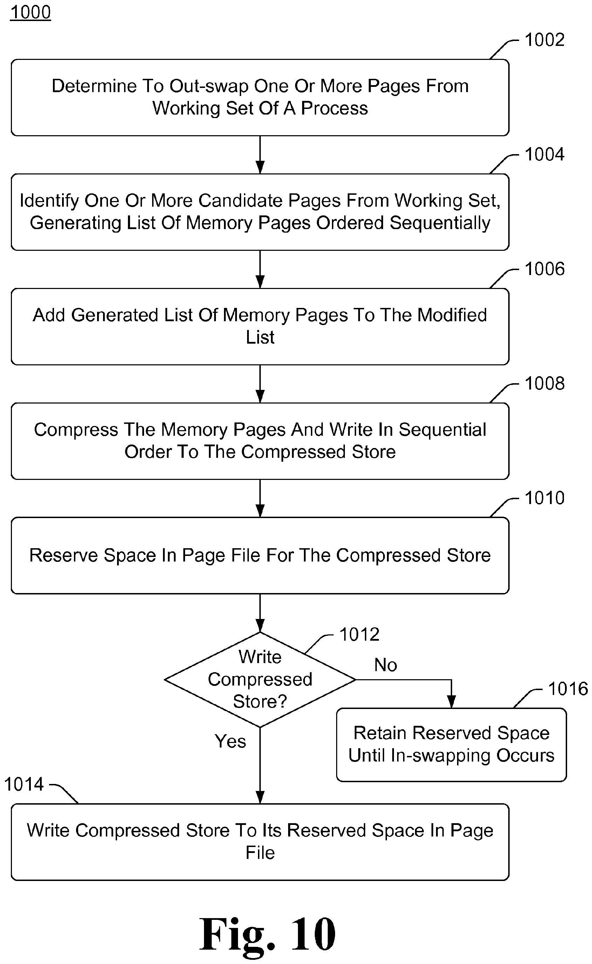

Fig. 10 is a flowchart illustrating an example process 1000 for out-swapping the working set in accordance with one or more embodiments. Process 1000 is carried out by a compressed store manager, such as compressed store manager 104 of Fig. 1, and can be implemented in software, firmware, hardware, or combinations thereof. Process 1000 is shown as a set of acts and is not limited to the order shown for performing the operations of the various acts. Process 1000 is an example process for out-swapping the working set; additional discussions of out-swapping the working set are included herein with reference to different figures.

In process 1000, a determination is made to swap out one or more pages from a working set of a process into a page file (act 1002). This determination may be made (e.g., by the memory manager 102 or other policy manager) based on various criteria, such as a determination that the process is inactive or suspended, that one or more threads associated with the process have not been active for a particular amount of time, that the process has been in the background for a particular amount of time, that the process has not used a certain number of pages during a particular amount of time, that the computing system as a whole has been suspended or is inactive, and so forth.

Once the decision to swap out one or more pages has been made, one or more candidate pages are identified from a working set of the process and a list of these candidate memory pages is generated (act 1004). The list of candidate memory pages is ordered sequentially, such as from smallest virtual address to largest virtual address. In one or more embodiments, the memory manager 102 analyzes each page of the working set and determines whether each page is a candidate for out-swapping based on certain criteria. In one or more embodiments, candidates for out-swapping may include the private pages and/or page file backed shared pages in the working set 202. Candidate pages may also be identified in different manners, such as based on whether those pages are clean (pages that have been written to the compressed store 110 but have not been modified since such writing, such that the current version of the page in physical memory is the same as the page in the compressed store 110). Further, in one or more embodiments whether or not a page is locked in memory may be considered when deciding whether the page is a candidate for out-swapping.

The candidate memory pages on the list generated in act 1004 are added to the modified list 206 (act 1006). The candidate memory pages are added to the modified list in the same sequential ordering as they appear on the list generated in act 1004.

The candidate memory pages in the modified list 206 are compressed and written to the compressed store 110 associated with the running program that is the process (act 1008). The compression can be performed in any of a variety of manners, analogous to the discussion above regarding Fig. 5. Various other operations (e.g., encrypting the content of the memory pages, generating error-detecting data, etc.) can also optionally be performed on the memory pages, analogous to the discussion above regarding Fig. 5. The compressed memory pages are written to the compressed store 110 in this same sequential ordering as they appear on the list generated in act 1004 and in which they appear in the modified list 206. Thus, although the memory pages in the working set 202 may be non-contiguous in the working set 202, they are written into contiguous locations in the compressed store 110 (e.g., as shown in Fig. 9). After a candidate memory page is written to the compressed store 110, the candidate memory page is removed from the working set 202 (e.g., and added to a free list).

Space is reserved in the page file 112 sufficient to store the compressed store 110 (act 1010). Reserving space in the page file 112 refers to setting aside or marking part of the page file 112 as acceptable for the compressed store 110 to be written into, but unacceptable for other data to be written into. Space in the page file 112 can be reserved in a variety of different manners, such as by maintaining an allocation table or other record identifying portions of the page file and whether such portions are reserved (and if reserved, the compressed store 110 for which they are reserved). The reserving can be performed by, for example, the memory manager 102 or the compressed storage manager 104.

At some later time, a decision is made (e.g., by the memory manager 102 or compressed storage manager 104) to write the compressed store 110 including the compressed out-swapped pages to its reserved space in the page file 112 (act 1012). In one or more embodiments, this decision may be made based on a determination that a certain threshold amount of time has passed during which the criteria that led to the decision to out-swap (in act 1002) are still valid. For example, a particular amount of time (e.g., 5 minutes) may pass in which a process is still inactive or suspended. The decision may also be made based on a determination by the memory manager 102 that more physical memory is needed for use by one or more other programs 108.

In response to the decision in act 1012 to write the compressed store to the swap file, the compressed store memory pages are written to the reserved space in the page file (act 1014). In one or more embodiments, all of the compressed store memory pages are removed and written to the page file 112 in one or more write operations. Alternatively, only a portion of the compressed store memory pages may be removed and written to the page file 112. In some embodiments, the candidate pages written may be determined based on pressure for memory (e.g., based on the memory manager's need for more physical memory). After being written to the page file 112, compressed store memory pages are placed on the standby list at the priority level of the compressed store memory pages (or alternatively a lower level). At this point, the compressed store memory pages are treated as available memory on the system and can be repurposed at any time as desired by the memory manager 102.

Returning to act 1012, in some situations the decision may be made to not write out the compressed store. In such situations, the reserved space for the compressed store is retained until in-swapping occurs. In one or more embodiments, the decision may be made to not write out the compressed store if the conditions that led to the initial decision to out-swap pages (e.g., in act 1002) are no longer present after a particular threshold amount of time. For example, the process may be active again or may no longer be suspended. In other situations, a decision to in-swap pages may occur before those candidate pages have been written to the page file.

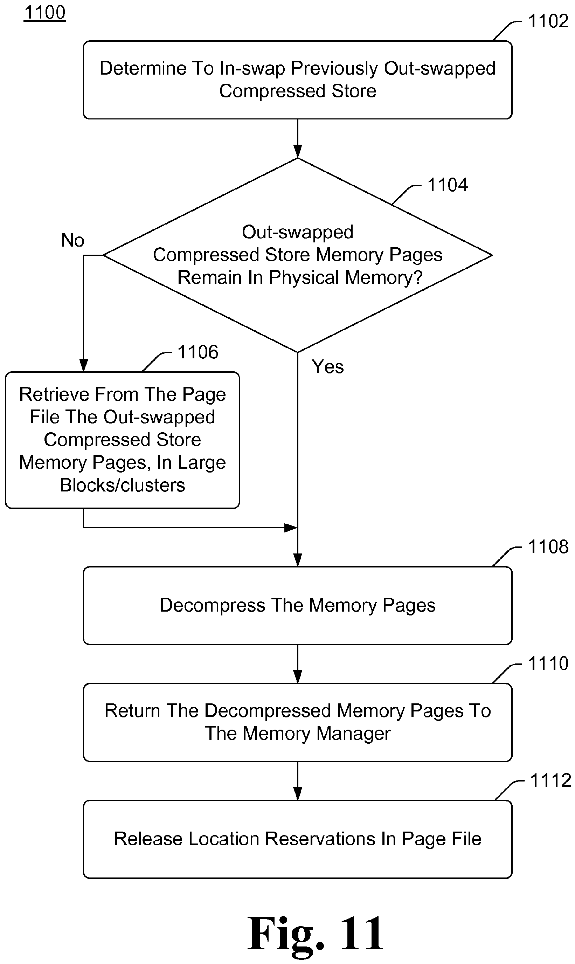

Fig. 11 is a flowchart illustrating an example process 1100 for in-swapping the working set in accordance with one or more embodiments. Process 1100 is carried out by a compressed store manager, such as compressed store manager 104 of Fig. 1, and can be implemented in software, firmware, hardware, or combinations thereof. Process 1100 is shown as a set of acts and is not limited to the order shown for performing the operations of the various acts. Process 1100 is an example process for in-swapping the working set; additional discussions of in-swapping the working set are included herein with reference to different figures.

In process 1100, a determination is made to in-swap a compressed store that was previously out-swapped from a working set for a process (act 1102). In one or more embodiments, this determination is made by the memory manager 102 or other policy manager, and may be made based on various criteria. Such criteria may include receiving an indication that the process is no longer inactive or suspended, a cessation of those conditions that led to the decision to out-swap in act 1002 of Fig. 10, and so forth.

A determination is made whether the compressed store memory pages of the out-swapped compressed remain in physical memory (act 1104). In some situations, compressed store memory pages may have been written to the page file but remain in physical memory (e.g., if the pages were cached on the standby list and have not yet been repurposed). In such situations, these compressed store memory pages that remain in physical memory can be decompressed rather than reading the compressed store memory pages from the page file.

If an out-swapped compressed store memory page is not in physical memory, then the memory page is retrieved from the page file (act 1106). Retrieving compressed store memory pages includes reading the compressed store memory pages from the page file and storing the compressed store memory pages into a compressed store 110 of the paged memory 106. In one or more embodiments, this reading in of compressed store memory pages reads in large blocks of compressed store memory pages from the page file, which are therefore more efficient than reads of smaller blocks from arbitrary locations in the page file. Further, because the pages were written into a contiguous block reserved in the page file and were written in sequential virtual address order, clusters of multiple pages may then be read in large blocks and in sequential virtual address order, providing for more efficient read operations.

The out-swapped memory pages in the compressed store memory pages of the compressed store 110 are decompressed (act 1108) and returned to the memory manager (act 1110). Returning the decompressed memory pages to the memory manager allows the decompressed memory pages to be included in the working set of the program. The decompression can be performed in any of a variety of manners, analogous to the discussion above regarding Fig. 6. Various other operations (e.g., decrypting the content of the memory pages, verifying error-detecting data, etc.) can also optionally be performed on the memory pages, analogous to the discussion above regarding Fig. 6. After being decompressed and returned, the compressed memory page is deleted from the region of the compressed store 110. After the contents of a compressed store memory page have been decompressed and returned, the compressed store memory page can be repurposed or freed.

The reserved space for the compressed store in the page file is also released (act 1112). The reserved space in the page file is then available to store other data.

Returning to act 1104, if any of the out-swapped memory pages remain in physical memory, then those memory pages are decompressed (act 1108) and returned to the memory manager (act 1110). The compressed store memory pages storing those out-swapped compressed memory pages need not be read from the page file in act 1106 because they remain in physical memory.

It should be noted that the retrieval of the out-swapped compressed store memory pages in act 1106 and the decompression of the memory pages in act 1108 can be performed in parallel. In one or more embodiments, memory pages that have been retrieved from the page file are decompressed while at the same time other out-swapped compressed store memory pages are being read from the page file. Multiple threads can be used to decompress memory pages and retrieve compressed store memory pages from the page file. For example, one thread running on one processor core in the system 100 can manage retrieval of the compressed store memory pages from the page file, and threads running concurrently or in parallel on the remaining processor cores in the system 100 can manage decompression of memory pages.

Thus, the performance of in-swapping compressed store memory pages can be increased using the techniques discussed herein. The memory pages are compressed, so fewer memory pages are read than would be read without compression. Furthermore, the decompression can be performed in parallel with the reading of the memory pages, and multiple decompression threads can run concurrently, further increasing the speed at which decompressed memory pages can be returned to the memory manager.

The techniques discussed herein also support various additional functionality. The number of reads and writes to the storage device that stores the page file can be reduced due to the memory pages being compressed. Reducing the number of reads and writes to the storage device can result in an increased lifespan for the storage device, as well as reduce bottlenecks due to storage device input/output. Furthermore, the compression of memory pages can result in an increase in the number of memory pages available for allocation to programs by the memory manager.

Furthermore, the out-swapped compressed store memory pages take up a smaller number of pages than the decompressed versions of the memory pages. The out-swapped compressed store memory pages are written to the page file 112 and added to the standby list as discussed above, and due to their compressed nature a larger number of compressed stores may be able to be kept on the standby list. This may increase the likelihood that if a suspended program is resumed, the compressed store memory pages for the program are in physical memory and thus can be in-swapped quicker than if retrieved from the page file.

Additionally, compressed memory pages are stored in the compressed stores at similar priority levels as those memory pages were prior to compression. By maintaining at least similar priority levels of memory pages, priority inversion scenarios in which significantly higher priority memory pages are written to the page file before lower priority memory pages are avoided.

Although particular functionality is discussed herein with reference to particular modules, it should be noted that the functionality of individual modules discussed herein can be separated into multiple modules, and/or at least some functionality of multiple modules can be combined into a single module. Additionally, a particular module discussed herein as performing an action includes that particular module itself performing the action, or alternatively that particular module invoking or otherwise accessing another component or module that performs the action (or performs the action in conjunction with that particular module). Thus, a particular module performing an action includes that particular module itself performing the action and/or another module invoked or otherwise accessed by that particular module performing the action.

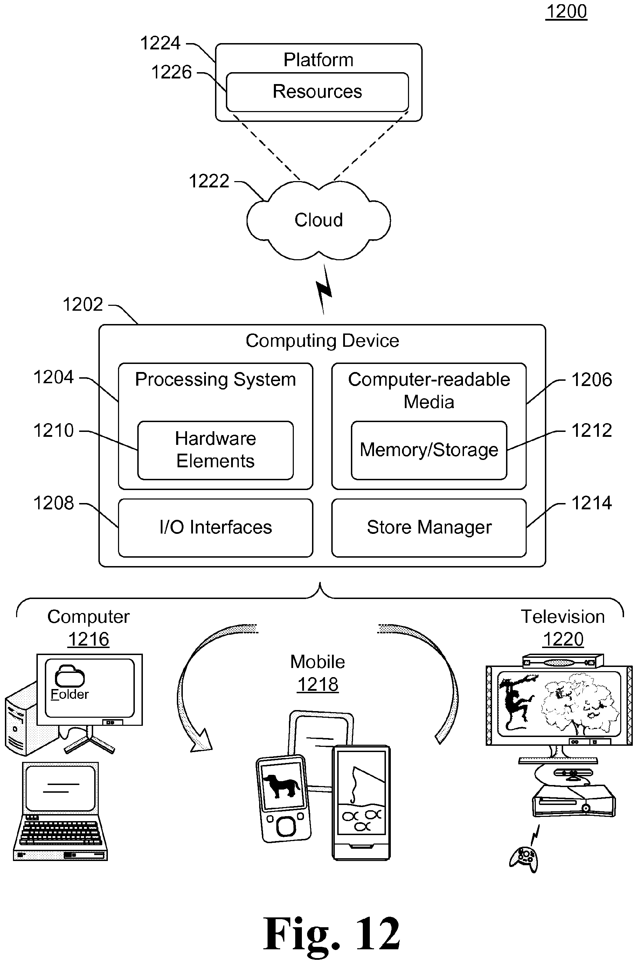

Fig. 12 illustrates an example system generally at 1200 that includes an example computing device 1202 that is representative of one or more systems and/or devices that may implement the various techniques described herein. The computing device 1202 may be, for example, a server of a service provider, a device associated with a client (e.g., a client device), an on-chip system, and/or any other suitable computing device or computing system.

The example computing device 1202 as illustrated includes a processing system 1204, one or more computer-readable media 1206, and one or more I/O Interfaces 1208 that are communicatively coupled, one to another. Although not shown, the computing device 1202 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 1204 is representative of functionality to perform one or more operations using hardware. Accordingly, the processing system 1204 is illustrated as including hardware elements 1210 that may be configured as processors, functional blocks, and so forth. This may include implementation in hardware as an application specific integrated circuit or other logic device formed using one or more semiconductors. The hardware elements 1210 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 1206 is illustrated as including memory/storage 1212. The memory/storage 1212 represents memory/storage capacity associated with one or more computer-readable media. The memory/storage 1212 may include volatile media (such as random access memory (RAM)) and/or nonvolatile media (such as read only memory (ROM), Flash memory, optical disks, magnetic disks, and so forth). The memory/storage 1212 may include fixed media (e.g., RAM, ROM, a fixed hard drive, and so on) as well as removable media (e.g., Flash memory, a removable hard drive, an optical disc, and so forth). The computer-readable media 1206 may be configured in a variety of other ways as further described below.

Input/output interface(s) 1208 are representative of functionality to allow a user to enter commands and information to computing device 1202, and also allow information to be presented to the user and/or other components or devices using various input/output devices. Examples of input devices include a keyboard, a cursor control device (e.g., a mouse), a microphone (e.g., for voice inputs), a scanner, touch functionality (e.g., capacitive or other sensors that are configured to detect physical touch), a camera (e.g., which may employ visible or non-visible wavelengths such as infrared frequencies to detect movement that does not involve touch as gestures), and so forth. Examples of output devices include a display device (e.g., a monitor or projector), speakers, a printer, a network card, tactile-response device, and so forth. Thus, the computing device 1202 may be configured in a variety of ways as further described below to support user interaction.

Computing device 1202 also includes a store manager 1214. Store manager 1214 provides various modified memory compression functionality as discussed above. Store manager 1214 can implement, for example, the compressed store manager 104 of Fig. 1. Although illustrated as separate from the computer-readable media 1206, it should be noted that the store manager 1214 can alternatively be implemented as part of the computer-readable media 1206.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of computing platforms having a variety of processors.

An implementation of the described modules and techniques may be stored on or transmitted across some form of computer-readable media. The computer-readable media may include a variety of media that may be accessed by the computing device 1202. By way of example, and not limitation, computer-readable media may include "computer-readable storage media" and "computer-readable signal media."

"Computer-readable storage media" refers to media and/or devices that enable persistent storage of information and/or storage that is tangible, in contrast to mere signal transmission, carrier waves, or signals per se. Thus, computer-readable storage media refers to non-signal bearing media. The computer-readable storage media includes hardware such as volatile and non-volatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Computer-readable signal media" refers to a signal-bearing medium that is configured to transmit instructions to the hardware of the computing device 1202, such as via a network. Signal media typically may embody computer readable instructions, data structures, program modules, or other data in a modulated data signal, such as carrier waves, data signals, or other transport mechanism. Signal media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 1210 and computer-readable media 1206 are representative of instructions, modules, programmable device logic and/or fixed device logic implemented in a hardware form that may be employed in some embodiments to implement at least some aspects of the techniques described herein. Hardware elements may include components of an integrated circuit or on-chip system, an application-specific integrated circuit (ASIC), a field-programmable gate array (FPGA), a complex programmable logic device (CPLD), and other implementations in silicon or other hardware devices. In this context, a hardware element may operate as a processing device that performs program tasks defined by instructions, modules, and/or logic embodied by the hardware element as well as a hardware device utilized to store instructions for execution, e.g., the computer-readable storage media described previously.

Combinations of the foregoing may also be employed to implement various techniques and modules described herein. Accordingly, software, hardware, or program modules and other program modules may be implemented as one or more instructions and/or logic embodied on some form of computer-readable storage media and/or by one or more hardware elements 1210. The computing device 1202 may be configured to implement particular instructions and/or functions corresponding to the software and/or hardware modules. Accordingly, implementation of modules as a module that is executable by the computing device 1202 as software may be achieved at least partially in hardware, e.g., through use of computer-readable storage media and/or hardware elements 1210 of the processing system. The instructions and/or functions may be executable/operable by one or more articles of manufacture (for example, one or more computing devices 1202 and/or processing systems 1204) to implement techniques, modules, and examples described herein.

As further illustrated in Fig. 12, the example system 1200 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 1200, multiple devices are interconnected through a central computing device. The central computing device may be local to the multiple devices or may be located remotely from the multiple devices. In one or more embodiments, the central computing device may be a cloud of one or more server computers that are connected to the multiple devices through a network, the Internet, or other data communication link.

In one or more embodiments, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one or more embodiments, a class of target devices is created and experiences are tailored to the generic class of devices. A class of devices may be defined by physical features, types of usage, or other common characteristics of the devices.

In various implementations, the computing device 1202 may assume a variety of different configurations, such as for computer 1216, mobile 1218, and television 1220 uses. Each of these configurations includes devices that may have generally different constructs and capabilities, and thus the computing device 1202 may be configured according to one or more of the different device classes. For instance, the computing device 1202 may be implemented as the computer 1216 class of a device that includes a personal computer, desktop computer, a multi-screen computer, laptop computer, netbook, and so on.

The computing device 1202 may also be implemented as the mobile 1218 class of device that includes mobile devices, such as a mobile phone, portable music player, portable gaming device, a tablet computer, a multi-screen computer, and so on. The computing device 1202 may also be implemented as the television 1220 class of device that includes devices having or connected to generally larger screens in casual viewing environments. These devices include televisions, set-top boxes, gaming consoles, and so on.

The techniques described herein may be supported by these various configurations of the computing device 1202 and are not limited to the specific examples of the techniques described herein. This functionality may also be implemented all or in part through use of a distributed system, such as over a "cloud" 1222 via a platform 1224 as described below.

The cloud 1222 includes and/or is representative of a platform 1224 for resources 1226. The platform 1224 abstracts underlying functionality of hardware (e.g., servers) and software resources of the cloud 1222. The resources 1226 may include applications and/or data that can be utilized while computer processing is executed on servers that are remote from the computing device 1202. Resources 1226 can also include services provided over the Internet and/or through a subscriber network, such as a cellular or Wi-Fi network.

The platform 1224 may abstract resources and functions to connect the computing device 1202 with other computing devices. The platform 1224 may also serve to abstract scaling of resources to provide a corresponding level of scale to encountered demand for the resources 1226 that are implemented via the platform 1224. Accordingly, in an interconnected device embodiment, implementation of functionality described herein may be distributed throughout the system 1200. For example, the functionality may be implemented in part on the computing device 1202 as well as via the platform 1224 that abstracts the functionality of the cloud 1222.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

## Claims

1. A computer-implemented method to increase an amount of memory available for allocation to processes of programs running on a computing device, where the memory is a paged memory (106), the method comprising:
identifying (502) a first set of memory pages that have been modified, wherein the first set of memory pages is allocated to one of the processes;
compressing (504) the first set of memory pages into a compressed store (110) of the paged memory (106), wherein the compressed store that is made up of a second set of memory pages;
allowing (506) a memory manager (102) to repurpose the first set of memory pages after the first set of memory pages has been compressed into the compressed store (110); and
writing (508) out the second set of memory pages to a page file (112) rather than writing out the first set of memory pages to the page file (112),
**characterized in that**
the compressed store (110) is associated with only said one of the processes, and
the page file (112) is located in a secondary storage device which has slower read/write times but larger storage capacity than the paged memory (106).

2. A method as recited in claim 1, further comprising allowing (506) the memory manager (102) to repurpose the second set of memory pages after the second set of memory pages has been written to the page file (112).

3. A method as recited in claim 1, wherein said steps of identifying, compressing, and writing further comprise, in response to determining (1002) to out-swap of said first set of memory pages as candidate memory pages of said one of the processes:
identifying (1004) a list of the candidate memory pages in a working set of said one of the processes;
compressing (1008) the identified candidate memory pages;
writing (1008) the compressed identified candidate memory pages to the compressed store (110) in sequential order by virtual memory address of the identified candidate memory pages;
reserving (1010) space in the page file (112) for the compressed store (110); and
writing (1014) out the compressed store (110) to the reserved space in the page file (112).

4. A method as recited in claim 3, further comprising, in response to determining to in-swap (1102) the compressed store (110), that was previously out-swapped from the working set of said one of the processes:
retrieving (1106) the compressed store (110) from the page file (112);
storing (1106) the retrieved compressed store (110) into a third set of memory pages;
decompressing (1108) the compressed memory pages in the third set of memory pages; and
returning (1110) the decompressed memory pages for inclusion in the working set of the process.

5. A method as recited in claim 1, further comprising guaranteeing forward progress in returning the first set of memory pages after the first set of memory pages has been compressed and regardless of whether the second set of memory pages has been written to the page file (112) or repurposed after being written to the page file (112).

6. A method as recited in claim 1, each of the first set of memory pages having at least similar priority levels, and each of the second set of memory pages having at least similar priority levels.

7. A computing device configured to increase an amount of memory available for allocation to processes of programs running on a computing device, the computing device comprising:
a memory (106);
a memory manager (102) configured to manage pages of the memory, the memory being a paged memory (106); and
a compressed store manager (104) configured to increase the amount of the memory that is available to the memory manager (102) to allocate to the processes of programs running on the computing device by:
compressing (504) a first set of memory pages that have been modified, into a compressed store (110) of the paged memory (106), the compressed store being made up of a second set of memory pages, wherein the first set of memory pages is allocated to one of the processes;
allowing (506), for each memory page of the first set of memory pages, the memory manager (102) to repurpose the memory page after the memory page has been compressed into the compressed store (110); and
writing (508) out the second set of memory pages to a page file (112) in the absence of writing out the first set of memory pages to the page file (112),
**characterized in that**
the compressed store (110) is associated with only said one of the processes, and
the page file (112) is located in a secondary storage device which has slower read/write times but larger storage capacity than the paged memory (106).

8. A computing device as recited in claim 7, the compressed store manager (104) being further configured, with regard to compressing and writing, to: in response to determining (1002) to out-swap of said first set of memory pages as candidate memory pages of said one of the processes:
identify (1004) a list of the candidate memory pages in a working set of said one of the processes, compress (1008) the identified candidate memory pages,
write (1008) the compressed identified candidate memory pages to the compressed store (110) in sequential order by virtual memory address of the identified candidate memory pages,
reserve (1010) space in the page file (112) for the compressed store (110), and
write (1014) out the compressed store (110) contiguously to the reserved space in the page file (112); and
in response to determining (1102) to in-swap the compressed store (110), that was previously out-swapped from the working set of said one of the processes: retrieve (1106) the compressed store (110) from the page file (112),
store (1106) the retrieved compressed store (110) into a third set of memory pages,
decompress (1108) the compressed memory pages in the third set of memory pages, and
return (1110) the decompressed memory pages for inclusion in the working set of the process.

## Patentansprüche

1. Rechnerimplementiertes Verfahren zum Erhöhen einer Speichermenge, die zur Zuweisung zu Prozessen von Programmen, die auf einer Rechenvorrichtung laufen, verfügbar ist, wo der Speicher ein seitennummerierter Speicher (106) ist, das Verfahren umfassend:
Identifizieren (502) eines ersten Satzes von Speicherseiten, die modifiziert wurden, wobei der erste Satz von Speicherseiten einem der Prozesse zugewiesen ist;
Komprimieren (504) des ersten Satzes von Speicherseiten in einen komprimierten Speicherplatz (110) des seitennummerierten Speichers (106), wobei der komprimierte Speicherplatz aus einem zweiten Satz von Speicherseiten besteht;
einem Speicherverwalter (102) erlauben (506), den ersten Satz von Speicherseiten wiederzuverwenden, nachdem der erste Satz von Speicherseiten in den komprimierten Speicherplatz (110) komprimiert wurde; und
Ausschreiben (508) des zweiten Satzes von Speicherseiten zu einer Seitendatei (112), anstatt den ersten Satz von Speicherseiten zur Seitendatei (112) auszuschreiben,
**dadurch gekennzeichnet, dass**
der komprimierte Speicherplatz (110) nur dem einen genannten der Prozesse zugehörig ist, und
die Seitendatei (112) in einer sekundären Speichervorrichtung gelegen ist, die langsamere Lese-/Schreibezeiten, aber eine größere Speicherkapazität als der seitennummerierte Speicher (106) hat.

2. Verfahren nach Anspruch 1, ferner umfassend dem Speicherverwalter (102) erlauben (506), den zweiten Satz von Speicherseiten wiederzuverwenden, nachdem der zweite Satz von Speicherseiten in die Seitendatei (112) geschrieben wurde.

3. Verfahren nach Anspruch 1, wobei die Schritte zum Identifizieren, Komprimieren und Schreiben ferner, in Antwort auf ein Bestimmen (1002), den ersten Satz von Speicherseiten als Kandidatenspeicherseiten aus dem einen genannten der Prozesse auszulagern, umfassen:
Identifizieren (1004) einer Liste der Kandidatenspeicherseiten in einem Arbeitssatz des einen genannten der Prozesse;
Komprimieren (1008) der identifizierten Kandidatenspeicherseiten;
Schreiben (1008) der komprimierten identifizierten Kandidatenspeicherseiten in den komprimierten Speicherplatz (110) in aufeinanderfolgender Reihe nach einer virtuellen Speicheradresse der identifizierten Kandidatenspeicherseiten;
Reservieren (1010) eines Platzes in der Seitendatei (112) für den komprimierten Speicherplatz (110); und
Ausschreiben (1014) des komprimierten Speicherplatzes (110) zum reservierten Platz in der Seitendatei (112).

4. Verfahren nach Anspruch 3, ferner umfassend, in Antwort auf eine Bestimmung, den komprimierten Speicherplatz (110) einzulagern, der zuvor vom Arbeitssatz des einen genannten der Prozesse ausgelagert wurde:
Abrufen (1106) des komprimierten Speicherplatzes (110) von der Seitendatei (112);
Speichern (1106) des empfangenen komprimierten Speicherplatzes (110) in einen dritten Satz von Speicherseiten;
Dekomprimieren (1108) der komprimierten Speicherseiten im dritten Satz von Speicherseiten; und
Zurückbringen (1110) der dekomprimierten Speicherseiten zur Eingliederung in den Arbeitssatz des Prozesses.

5. Verfahren nach Anspruch 1, ferner umfassend ein Garantieren eines Fortschritts beim Zurückbringen des ersten Satzes von Speicherseiten, nachdem der erste Satz von Speicherseiten komprimiert wurde und ungeachtet dessen, ob der zweite Satz von Speicherseiten in die Seitendatei (112) geschrieben wurde oder, nachdem er in die Seitendatei (112) geschrieben wurde, wiederverwendet wurde.

6. Verfahren nach Anspruch 1, wobei jede des ersten Satzes von Speicherseiten zumindest ähnliche Prioritätsstufen hat und jede des zweiten Satzes von Speicherseiten zumindest ähnliche Prioritätsstufen hat.

7. Rechenvorrichtung, die zum Erhöhen einer Speichermenge, die für eine Zuweisung zu Prozessen von Programmen, die auf einer Rechenvorrichtung laufen, verfügbar ist, konfiguriert ist, die Rechenvorrichtung umfassend:
einen Speicher (106);
einen Speicherverwalter (102), der konfiguriert ist, Seiten des Speichers zu verwalten, wobei der Speicher ein seitennummerierter Speicher (106) ist; und
einen komprimierten Speicherplatzverwalter (104), der zum Erhöhen der Speichermenge konfiguriert ist, die dem Speicherverwalter (102) zur Verfügung steht, um den Prozessen der Programme, die auf der Rechenvorrichtung laufen, zugewiesen zu werden, durch:
Komprimieren (504) eines ersten Satzes von Speicherseiten, die modifiziert wurden, in einen komprimierten Speicherplatz (110) des seitennummerierten Speichers (106), wobei der komprimierte Speicherplatz aus einem zweiten Satz von Speicherseiten besteht, wobei der erste Satz von Speicherseiten einem der Prozesse zugewiesen ist;
Erlauben (506), für jede Speicherseite des ersten Satzes von Speicherseiten, dem Speicherverwalter (102) die Speicherseite wiederzuverwenden, nachdem die Speicherseite in den komprimierten Speicherplatz (110) komprimiert wurde; und
Ausschreiben (508) des zweiten Satzes von Speicherseiten zu einer Seitendatei (112), bei fehlendem Ausschreiben des ersten Satzes von Speicherseiten zur Seitendatei (112),
**dadurch gekennzeichnet, dass**
der komprimierte Speicherplatz (110) nur dem einen genannten der Prozesse zugehörig ist, und
die Seitendatei (112) in einer sekundären Speichervorrichtung gelegen ist, die langsamere Lese-/Schreibezeiten, aber eine größere Speicherkapazität als der seitennummerierte Speicher (106) hat.

8. Rechenvorrichtung nach Anspruch 7, wobei der komprimierte Speicherplatzverwalter (104) ferner in Bezug auf Komprimieren und Schreiben konfiguriert ist zum:
in Antwort auf ein Bestimmen (1002), den ersten Satz von Speicherseiten als Kandidatenspeicherseiten des einen genannten der Prozesse auszulagern:
Identifizieren (1004) einer Liste der Kandidatenspeicherseiten in einem Arbeitssatz des einen genannten der Prozesse,
Komprimieren (1008) der identifizierten Kandidatenspeicherseiten,
Schreiben (1008) der komprimierten identifizierten Kandidatenspeicherseiten in den komprimierten Speicherplatz (110) in aufeinanderfolgender Reihe nach einer virtuellen Speicheradresse der identifizierten Kandidatenspeicherseiten,
Reservieren (1010) eines Platzes in der Seitendatei (112) für den komprimierten Speicherplatz (110) und
Ausschreiben (1014) des komprimierten Speicherplatzes (110) zum reservierten Platz in der Seitendatei (112); und
in Antwort auf ein Bestimmen (1102), den komprimierten Speicherplatz (110) einzulagern, der zuvor vom Arbeitssatz des einen genannten der Prozesse ausgelagert wurde:
Abrufen (1106) des komprimierten Speicherplatzes (110) von der Seitendatei (112),
Speichern (1106) des empfangenen komprimierten Speicherplatzes (110) in einen dritten Satz von Speicherseiten,
Dekomprimieren (1108) der komprimierten Speicherseiten im dritten Satz von Speicherseiten; und
Zurückbringen (1110) der dekomprimierten Speicherseiten zur Eingliederung in den Arbeitssatz des Prozesses.

## Revendications

1. Procédé, mis en oeuvre par ordinateur, pour augmenter une quantité de mémoire disponible à des fins d'affectation à des processus de programmes s'exécutant sur un dispositif informatique, où la mémoire est une mémoire paginée (106), le procédé comportant les étapes ci-dessous consistant à :
identifier (502) un premier ensemble de pages de mémoire qui ont été modifiées, dans lequel le premier ensemble de pages de mémoire est affecté à l'un des processus ;
compresser (504) le premier ensemble de pages de mémoire dans un magasin de stockage compressé (110) de la mémoire paginée (106), dans lequel le magasin de stockage compressé est constitué d'un deuxième ensemble de pages de mémoire ;
permettre (506) à un gestionnaire de mémoire (102) de réorienter le premier ensemble de pages de mémoire après que le premier ensemble de pages de mémoire a été compressé dans le magasin de stockage compressé (110) ; et
écrire (508) le deuxième ensemble de pages de mémoire dans un fichier de page (112) plutôt que d'écrire le premier ensemble de pages de mémoire dans le fichier de page (112) ;
**caractérisé en ce que**
le magasin de stockage compressé (110) est associé uniquement audit un des processus ; et
le fichier de page (112) est localisé dans un dispositif de stockage auxiliaire qui présente des temps de lecture/écriture plus longs, mais une capacité de stockage supérieure à celle de la mémoire paginée (106).

2. Procédé selon la revendication 1, comportant en outre l'étape consistant à permettre (506) au gestionnaire de mémoire (102) de réorienter le deuxième ensemble de pages de mémoire après que le deuxième ensemble de pages de mémoire a été écrit dans le fichier de page (112).

3. Procédé selon la revendication 1, dans lequel lesdites étapes d'identification, de compression et d'écriture comportent en outre, en réponse à une détermination (1002) de la nécessité de permutation externe dudit premier ensemble de pages de mémoire en qualité de pages de mémoire candidates dudit un des processus, les étapes ci-dessous consistant à :
identifier (1004) une liste des pages de mémoire candidates dans un ensemble de travail dudit un des processus ;
compresser (1008) les pages de mémoire candidates identifiées ;
écrire (1008) les pages de mémoire candidates identifiées compressées dans le magasin de stockage compressé (110), dans l'ordre séquentiel selon l'adresse de mémoire virtuelle des pages de mémoire candidates identifiées ;
réserver (1010) un espace dans le fichier de page (112) pour le magasin de stockage compressé (110) ; et
écrire (1014) le magasin de stockage compressé (110) dans l'espace réservé dans le fichier de page (112).

4. Procédé selon la revendication 3, comportant en outre, en réponse à une détermination de la nécessité de permutation interne (1102) du magasin de stockage compressé (110), lequel a précédemment fait l'objet d'une permutation externe à partir de l'ensemble de travail dudit un des processus, les étapes ci-dessous consistant à :
récupérer (1106) le magasin de stockage compressé (110) à partir du fichier de page (112) ;
stocker (1106) le magasin de stockage compressé récupéré (110), dans un troisième ensemble de pages de mémoire ;
décompresser (1108) les pages de mémoire compressées dans le troisième ensemble de pages de mémoire ; et
renvoyer (1110) les pages de mémoire décompressées à des fins d'inclusion dans l'ensemble de travail du processus.

5. Procédé selon la revendication 1, comportant en outre l'étape consistant à garantir une progression positive dans le cadre du renvoi du premier ensemble de pages de mémoire, après que le premier ensemble de pages de mémoire a été compressé, et que le deuxième ensemble de pages de mémoire ait été ou non écrit dans le fichier de page (112) ou ait été ou non réorienté après avoir été écrit dans le fichier de page (112).

6. Procédé selon la revendication 1, dans lequel chaque page du premier ensemble de pages de mémoire présente au moins des niveaux de priorité similaires, et chaque page du deuxième ensemble de pages de mémoire présente au moins des niveaux de priorité similaires.

7. Dispositif informatique configuré de manière à augmenter une quantité de mémoire disponible à des fins d'affectation à des processus de programmes s'exécutant sur un dispositif informatique, le dispositif informatique comportant :
une mémoire (106) ;
un gestionnaire de mémoire (102) configuré de manière à gérer des pages de la mémoire, la mémoire étant une mémoire paginée (106) ; et
un gestionnaire de magasin de stockage compressé (104) configuré de manière à augmenter la quantité de la mémoire à disposition du gestionnaire de mémoire (102) à affecter aux processus de programmes s'exécutant sur le dispositif informatique, en mettant en oeuvre les étapes ci-dessous consistant à :
compresser (504) un premier ensemble de pages de mémoire qui ont été modifiées, dans un magasin de stockage compressé (110) de la mémoire paginée (106), dans lequel le magasin de stockage compressé est constitué d'un deuxième ensemble de pages de mémoire, dans lequel le premier ensemble de pages de mémoire est affecté à l'un des processus ;
permettre (506), pour chaque page de mémoire du premier ensemble de pages de mémoire, au gestionnaire de mémoire (102) de réorienter la page de mémoire après que la page de mémoire a été compressée dans le magasin de stockage compressé (110) ; et
écrire (508) le deuxième ensemble de pages de mémoire dans un fichier de page (112) en l'absence d'une écriture du premier ensemble de pages de mémoire dans le fichier de page (112) ;
**caractérisé en ce que**
le magasin de stockage compressé (110) est associé uniquement audit un des processus ; et
le fichier de page (112) est localisé dans un dispositif de stockage auxiliaire qui présente des temps de lecture/écriture plus longs, mais une capacité de stockage supérieure à celle de la mémoire paginée (106).

8. Dispositif informatique selon la revendication 7, dans lequel le gestionnaire de magasin de stockage compressé (104) est en outre configuré, en ce qui concerne les étapes de compression et d'écriture, de manière à :
en réponse à une détermination (1002) de la nécessité de permutation externe dudit premier ensemble de pages de mémoire en qualité de pages de mémoire candidates dudit un des processus :
identifier (1004) une liste des pages de mémoire candidates dans un ensemble de travail dudit un des processus ;
compresser (1008) les pages de mémoire candidates identifiées ;
écrire (1008) les pages de mémoire candidates identifiées compressées dans le magasin de stockage compressé (110), dans l'ordre séquentiel selon l'adresse de mémoire virtuelle des pages de mémoire candidates identifiées ;
réserver (1010) un espace dans le fichier de page (112) pour le magasin de stockage compressé (110) ; et
écrire (1014) le magasin de stockage compressé (110) de manière contigüe dans l'espace réservé dans le fichier de page (112) ;
en réponse à une détermination (1102) de la nécessité de permutation interne du magasin de stockage compressé (110), lequel a précédemment fait l'objet d'une permutation externe à partir de l'ensemble de travail dudit un des processus :
récupérer (1106) le magasin de stockage compressé (110) à partir du fichier de page (112) ;
stocker (1106) le magasin de stockage compressé récupéré (110), dans un troisième ensemble de pages de mémoire ;
décompresser (1108) les pages de mémoire compressées dans le troisième ensemble de pages de mémoire ; et
renvoyer (1110) les pages de mémoire décompressées à des fins d'inclusion dans l'ensemble de travail du processus.
